Europäisches Patentamt

European Patent Office

Office européen des brevets

(11) Numéro de publication: **0 117 960**

**B1**

(12) **FASCICULE DE BREVET EUROPEEN**

(45) Date de publication du fascicule du brevet: 01.07.87

(51) Int. Cl.⁴: **H 04 N 11/18**

(21) Numéro de dépôt: **83402382.2**

(22) Date de dépôt: **09.12.83**

(54) **Circuit et procédé de réglage automatique de la fréquence centrale d'un filtre.**

(30) Priorité: **10.12.82 FR 8220773**

(43) Date de publication de la demande:
**12.09.84 Bulletin 84/37**

(45) Mention de la délivrance du brevet:
**01.07.87 Bulletin 87/27**

(84) Etats contractants désignés:
**DE FR GB IT NL**

(56) Documents cités:
**FUNKSCHAU, vol. 42, no. 21, novembre 1970, pages 2183-2190, Munich, DE, "Secam-Decoder"**

**ELECTRONICS, vol. 6, 20 mars 1967, pages 82-87, New York, US, E.I. SCHWARTZ et al.: "Detecting a signal digitally"**

(73) Titulaire: **THOMSON-CSF**
**173, Boulevard Haussmann**
**F-75379 Paris Cedex 08 (FR)**

(72) Inventeur: **Douziech, Patrick**
**THOMSON-CSF SCPI 173, bld Haussmann**
**F-75379 Paris Cedex 08 (FR)**
Inventeur: **Imbert, Michel**
**THOMSON-CSF SCPI 173, bld Haussmann**
**F-75379 Paris Cedex 08 (FR)**

(74) Mandataire: **Ruellan-Lemonnier, Brigitte et al**
**THOMSON-CSF SCPI 19, avenue de Messine**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 117 960 B1

# Description

La présente invention concerne un circuit et un procédé de réglage automatique de la fréquence centrale d'un filtre et, plus particulièrement, du filtre en cloche d'un téléviseur couleur de type SECAM.

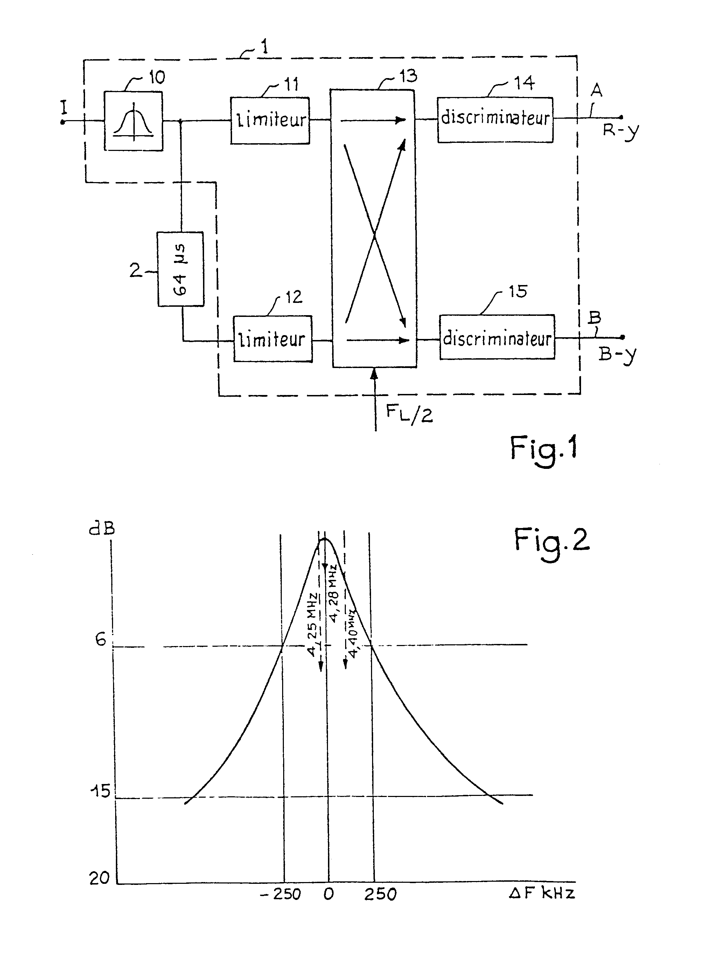

A titre de rappel et pour mieux faire comprendre la présente invention, la figure 1 indique sous forme de blocs les constituants principaux d'un circuit de décodage de chrominance classique adapté au système SECAM de télévision. Ce circuit de décodage de chrominance reçoit le signal vidéo composite I qui comprend les informations de chrominance contenues dans la modulation en fréquence de deux sous-porteuses à des fréquences de 4,25 et 4,40 MHz. Les fréquences proches de celles des sous-porteuses sont extraites par un filtre en cloche 10 dont la sortie est appliquée à des limiteurs 11 et 12, d'une part directement et d'autre part par l'intermédiaire d'une ligne à retard 2. Chaque limiteur a sa sortie connectée à une entrée d'un circuit permutateur 13 qui connecte alternativement chacun des limiteurs à chacun de deux discriminateurs de fréquence 14 et 15 sous la commande de signaux en créneaux à la demi-fréquence de ligne $F_L/2$. La sortie du discriminateur 14 sur une A voie correspond au premier signal de chrominance R—Y (ou B—Y) et la sortie du discriminateur 15 sur une voie B correspond au deuxième signal de chrominance B—Y (ou R—Y). Pour plus de détail sur les circuits de décodage de chrominance SECAM, on pourra se référer à tout ouvrage classique sur la télévision couleur.

On s'intéressera ici plus particulièrement au filtre en cloche 10. Ce filtre en cloche tire son appellation de l'allure de sa courbe de réponse qui est représentée en figure 2. Selon les normes courantes, la fréquence centrale du filtre est située à 4,28 MHz. C'est la fréquence pour laquelle le filtre présente une atténuation de 0 dB et il présente une atténuation de 6 dB quand la fréquence s'écarte de 250 kHz de cette fréquence centrale, à savoir un coefficient de qualité de 16. Cette fréquence centrale est aussi appelée fréquence de résonance du filtre.

Il est tout particulièrement important que la fréquence centrale de ce filtre soit bien centrée car, en fait, ce filtre est complémentaire d'un filtre analogue par lequel passent les signaux de télévision au niveau de l'émetteur.

Dans un mode de réalisation classique, ce filtre est du type à inductance-capacité. La capacité qui a par exemple une valeur de l'ordre de 200 pF pourrait être intégrée, mais ne l'est généralement pas car, de toute manière, l'inductance associée, elle, ne peut être intégrée. Cette inductance est réglable pour permettre d'accorder exactement la fréquence centrale ou fréquence de résonance du filtre à la fabrication. Cette nécessité de prévoir un réglage à la fabrication constitue un facteur de coût non négligeable. Un autre facteur de coût réside dans le fait que, une fois le filtre accordé à la fabrication, il est nécessaire qu'il ne dérive pas par suite du vieillissement des composants ou des variations thermiques. Il faut donc prévoir un condensateur et une inductance particulièrement précis et stables, c'est-à-dire des composants discrets de très haute qualité et donc coûteux.

La présente invention vise à éviter ces inconvénients en prévoyant un procédé et un circuit de réglage automatique de la fréquence centrale ou fréquence de résonance du filtre en cours de fonctionnement, ce circuit étant réalisable sous forme de circuit intégré. Il en résulte donc, d'une part, que l'on supprime la nécessité d'un réglage à la fabrication, d'autre part, que l'on peut choisir comme composants constitutifs du filtre des composants de moins haute qualité et de plus faible coût puisque les variations de ces composants seront automatiquement compensées.

Pour atteindre ces objets ainsi que d'autres, la présente invention prévoit un procédé de réglage automatique de la fréquence centrale du filtre en cloche d'un téléviseur couleur de type SECAM consistant à: connecter à ce filtre un amplificateur pouvant être bouclé et fonctionnant alors en oscillateur oscillant à la fréquence centrale du filtre; boucler l'amplificateur pendant un intervalle de temps correspondant à une partie au moins de la durée des signaux de retour de trame; pendant cet intervalle de temps, transmettre les signaux de sortie de l'oscillateur à un discriminateur de fréquence; comparer la sortie du discriminateur à une valeur de référence; à des instants successifs au cours de cet intervalle de temps, connecter en parallèle avec le filtre un circuit de capacité variable de sorte que la valeur résultante de la capacité soit croissante, jusqu'à ce que la sortie du discriminateur soit voisine de la valeur de référence; et maintenir la connexion du circuit de capacité variable au moins jusqu'aux signaux de retour de trame suivants.

Selon un mode de réalisation, le circuit de capacité variable peut être constitué de condensateurs. Dans ce cas, la connexion de condensateurs de valeurs croissantes peut être réalisée en adressant le résultat de la comparaison entre la sortie du discriminateur et une valeur de référence à l'entrée d'un compteur incrémenté lors de chacun des instants successifs en fonction de ce résultat, les condensateurs ayant chacun une borne connectée à l'une des sorties du compteur et étant mis en service ou hors service selon l'état de cette borne de sortie.

Selon un autre mode de réalisation, le circuit de capacité variable comporte un potentiomètre électronique monté en parallèle sur le filtre et comportant respectivement entre sa borne de sortie positive ou sa borne de sortie négative et sa borne d'entrée, un condensateur et une résistance pour pouvoir ramener sur le filtre une capacité variable. Dans ce cas, la variation de la valeur de la capacité peut être réalisée en adressant le résultat de la comparaison entre la sortie du discriminateur et une valeur de référence à l'entrée d'un compteur incrémenté lors de chacun des instants successifs en fonction de ce résultat et en envoyant les sorties du compteur sur un convertisseur numérique analogique dont le signal de sortie commande le gain du potentiomètre électronique.

Un circuit de réglage automatique de la fréquence central du filtre en cloche d'un téléviseur couleur du type SECAM selon l'invention comprend: un amplificateur connecté au filtre en cloche; une boucle de réaction permettant de faire fonctionner cet amplificateur en oscillateur à la fréquence centrale du filtre; un commutateur pour fermer cette boucle pendant un intervalle de temps correspondant à une partie au moins de la durée des signaux de retour de trame; un discriminateur de fréquence recevant la sortie de l'amplificateur fonctionnant en oscillateur; un comparateur comparant la sortie du discriminateur à un signal de référence; un compteur incrémenté par la sortie du comparateur à des instants successifs compris dans ledit intervalle de temps; et un circuit de capacité variable monté entre les sorties du compteur et le filtre pour ramener en parallèle sur le filtre une capacité variable dont la valeur est fonction de l'écart entre la sortie du discriminateur et la valeur de référence.

Ces objets, caractéristiques et avantages ainsi que d'autres de la présente invention seront exposés plus en détail dans la description suivante de modes de réalisation particuliers faite en relation avec les figures jointes parmi lesquelles:

— la figure 1, décrite précédemment, représente très schématiquement et sous forme de blocs l'ordonnancement classique d'un circuit de décodage de chrominance dans un téléviseur SECAM;

— la figure 2, décrite précédemment, représente l'allure de la courbe de réponse d'un filtre en cloche de téléviseur SECAM;

— la figure 3 représente sous forme de blocs un circuit de réglage automatique selon la présente invention;

— la figure 4, incluant les figures 4A à 4D, représente des variations de signaux en fonction du temps, destinées à aider à l'exposé du fonctionnement du circuit de la figure 3; et

— la figure 5 représente sous forme de blocs un autre mode de réalisation d'un circuit de réglage automatique selon la présente invention.

Sur les différentes figures, les mêmes références désignent les mêmes éléments.

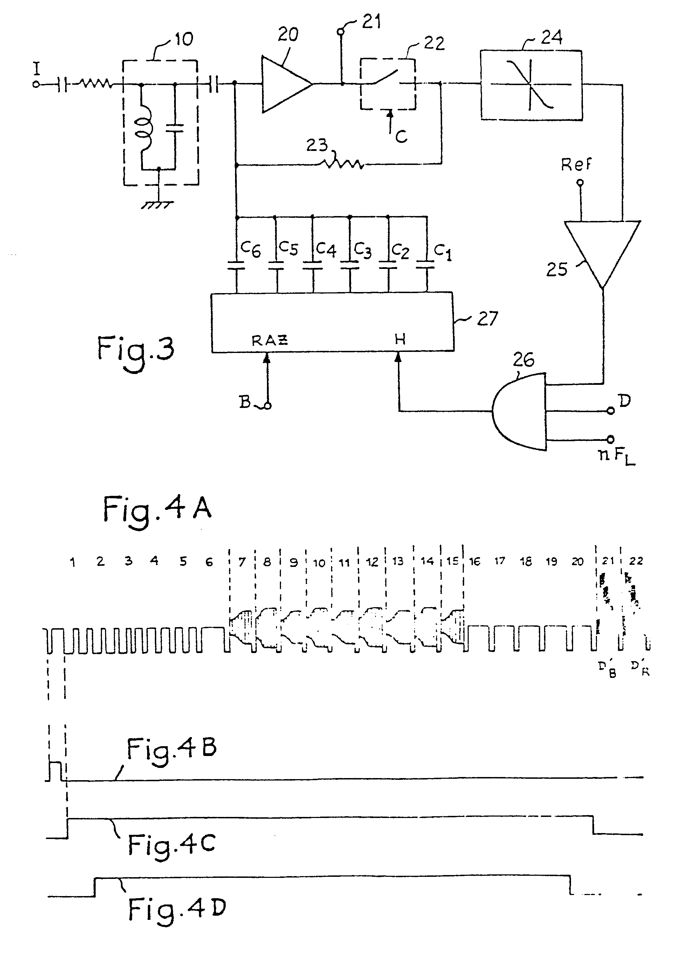

La figure 3 représente un circuit selon la présente invention. Le signal vidéo composite I porteur des informations de chrominance est envoyé au filtre en cloche 10. On a représenté sur la figure des condensateur d'entrée et de sortie non référencés destinés à bloquer les signaux continus. Le filtre est connecté à un amplificateur 20 à gain élevé dont la sortie, accessible à une borne 21, constitue la sortie du filtre en cloche transmise au limiteur 11 et à la ligne à retard 2 de la figure 1. Cette sortie est également reliée par l'intermédiaire d'un interrupteur commandé 22, d'une part, à une boucle de réaction figurée par une résistance 23, d'autre part, à l'entrée d'un discriminateur de fréquence 24. La boucle de réaction de l'amplificateur 20 est choisi pour que, quand elle est fermée, cet amplificateur agisse comme un oscillateur oscillant à la fréquence centrale du filtre 10. Le discriminateur de fréquence 24 fournit un signal dont l'amplitude varie en fonction de la fréquence du signal qu'il reçoit. La sortie du discriminateur 24 est adressée à un comparateur 25 dont l'autre entrée reçoit un signal de référence Ref. La sortie de ce comparateur 25 est adressée à une première entrée d'une porte ET 26 dont la sortie est appliquée à l'entrée d'horloge ou d'incrémentation H d'un compteur 27 également muni d'une entrée de remise à zéro RAZ. Les sorties de ce compteur 27 sont appliquées aux premières bornes de condensateurs C1, C2, C3, C4, C5, C6 dont les autres bornes sont reliées en commun au filtre en cloche 10. Le compteur 27 est agencé de sorte que, quand l'une de ses sorties est à zéro, la borne du condensateur reliée à cette sortie n'est pas connectée et que, quand l'une de ses sorties est à 1, la borne du condensateur associé est mise à la masse. Ainsi, quand une sortie du compteur est à 1, le condensateur correspondant se trouve en parallèle sur le filtre en cloche 10.

Avant d'expliquer le fonctionnement du circuit de la figure 3, on rappellera la structure du signal vidéo composite transmis dans le cas du système de télévision couleur SECAM. Les images sont transmises par demi-image ou trame, une image comprenant par exemple 625 lignes.

La figure 4A représente les signaux correspondant au début d'une trame. Il apparaît tout d'abord une série de signaux en créneaux d'identification de début de trame au cours d'intervalles de temps successifs correspondant à six durées de ligne, la durée d'une ligne étant de 64 microsecondes selon les normes habituelles. Ensuite, on trouve, pendant la durée des lignes 7 à 15, des signaux modulés correspondant aux fréquences des sous-porteuses de chrominance (4,40 MHz pout le rouge et 4,25 MHz pour le bleu). Les lignes 16 à 20 sont à nouveau occupées par une succession de créneaux, puis à la ligne 21 on trouve un signal $D'_B$ modulé à partir de la sous-porteuse à 4,25 MHz caractéristique des informations bleues d'une ligne et à la ligne 22 un signal $D'_R$ modulé à partir d'une sous-porteuse à 4,40 MHz caractéristique des informations rouges d'une ligne; et ainsi de suite jusqu'à la ligne 310, les lignes 311 et 312 ainsi que le début de la ligne 313 étant occupés par des signaux caractéristiques d'une fin de trame. Il en est ensuite de même pour les signaux des lignes 313 à 335 qui caractérisent un début de trame, puis des lignes 623 à 625 qui caractérisent la fin de la trame suivante.

On retiendra pour ce qui nous intéresse ici que, parmi les signaux reçus par un téléviseur, il apparaît à la fin et au début de chaque trame, des signaux caractéristiques de retour de trame permettant d'identifier les fins et les débuts de trame, pendant lesquels on ne reçoit pas d'information utile pour l'image à former sur l'écran du téléviseur.

Le circuit de la figure 3 fonctionne de la façon suivante.

Tout d'abord, en dehors de la période de retour de trame, l'interrupteur 22 est ouvert, le signal vidéo composite arrivant sur la borne I et passant par le filtre en cloche 10 et l'amplificateur 20 est transmis à la borne 21 et appliqué au circuit de décodage de chrominance du type illustré en figure 1.

Ensuite, quand apparaissent les signaux de fin de trame, on produit une impulsion B telle que celle représentée en figure 4B pour agir sur l'entrée de remise à zéro du compteur 27. Tous les condensateurs C1 à C6 se trouvent alors déconnectés. Puis, dès qu'apparaissent les signaux d'identification de début d'une trame, pendant une durée illustrée par le créneau de la figure 4C, on ferme l'interrupteur 22. L'amplificateur 20, associé au filtre en cloche 10, fonctionne en oscillateur à la fréquence centrale du filtre. Le discriminateur 24 fournit alors un signal caractéristique du déréglage de ce filtre par rapport à une fréquence de référence choisie. Il en résulte l'apparition d'un signal à la sortie du comparateur 25. Ce signal est appliqué à la première entrée de la porte ET 26. La deuxième entrée de cette porte reçoit un signal D correspondant au créneau illustré en figure 4D validant cette porte pendant un intervalle de temps correspondant à une partie des durées d'identification de trame. La troisième entrée de la porte ET 26 reçoit des signaux à haute fréquence, présents en nombre important (supérieur à la capacité du compteur 27) pendant la durée du créneau de la figure 4D. Cette fréquence pourra par exemple être choisie comme un multiple de la fréquence de ligne que l'on appellera $nF_L$. Ainsi, lors de chacune des impulsions du signal $nF_L$, le compteur sera incrémenté d'une unité si un signal de sortie est présent à la sortie du comparateur 25, c'est-à-dire tant que la fréquence centrale du filtre en cloche compensée par l'ajout successif d'une combinaison des condensateurs C1 à C6 n'est pas égale à la fréquence prédéterminée fixée par le discriminateur 24. A titre d'exemple, les condensateurs C1 à C6 peuvent avoir des valeurs de 0,5, 1, 2, 4, 8, 16 pF. Ainsi, selon la présente invention, on réalise un reréglage du filtre en cloche 10 à chaque période de retour de trame. On s'affranchit donc bien des défauts et des dérives éventuelles des composants du filtre en cloche 10.

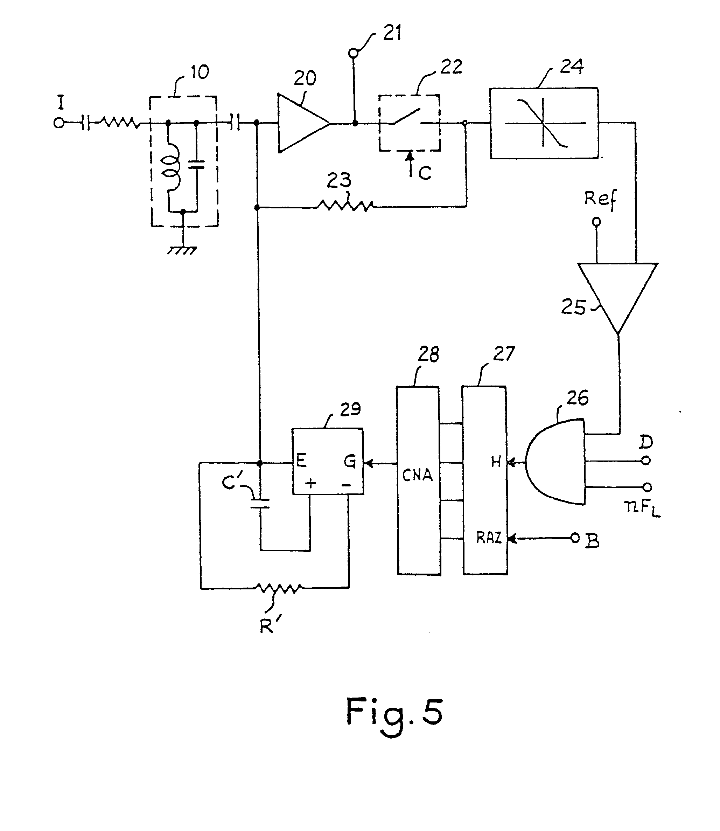

On décrira maintenant avec référence à la figure 5, un autre mode de réalisation d'un circuit selon la présente invention. En fait, la structure de ce circuit est identique à celle du circuit représenté à la figure 3 jusqu'à la sortie du compteur 27. En conséquence, cette partie du circuit ne sera pas redécrite ni dans sa structure ni dans son fonctionnement. Dans le circuit illustrée à la figure 5, les sorties du compteur 27 sont appliquées sur un convertisseur numérique analogique 28. Le signal analogique en sortie du convertisseur 28 est appliqué sur la borne G de commande du gain d'un potentiomètre électronique 29 dont la borne d'entrée E est reliée au filtre en cloche 10. D'autre part, une capacité C' est connectée entre la borne d'entrée E et la borne de sortie positive du potentiomètre électronique et une résistance R' est connectée entre la borne d'entrée E et la borne de sortie négative du potentiomètre 29 de manière à ramener une capacité variable en parallèle sur le filtre en cloche 10 sans modifier son coefficient de qualité comme expliqué ci-après.

Pour bien comprendre le fonctionnement du circuit ci-dessus, on rappellera tout d'abord qu'un potentiomètre électronique est équivalent à un amplificateur dont le gain varie en fonction d'une tension de commande.

Ainsi dans le mode de réalisation de la figure 5, le gain du potentiomètre électronique 29 est modifié par le signal analogique provenant du convertisseur (28).

Lorsque le gain du potentiomètre est modifié, il en résulte une modification de la valeur de la capacité ramenée en parallèle sur le filtre en cloche 10. Tant que la fréquence centrale du filtre en cloche compensée par la capacité variable ramenée en parallèle n'est pas égale à la fréquence prédéterminée fixée par le discriminateur 24, le compteur 27 s'incrémentera d'une unité, ce qui accroîtra l'amplitude du signal en sortie du convertisseur 28 et, en conséquence, le gain du potentiomètre 29.

Toutefois, lorsqu'on utilise un potentiomètre électronique couplé à une capacité pour faire varier la fréquence centrale d'un filtre en cloche, la variation du gain du potentiomètre s'accompagne d'une variation de la valeur de coefficient de qualité Q. En effet, on ramène en parallèle sur le filtre non seulement une capacité variable mais aussi une résistance variable liée aux imperfections du potentiomètre électronique. Le but de la résistant R' est dont de remédier à cet inconvénient en réalisant une variation antagoniste du coefficient de qualité Q. Ainsi le circuit de la figure 5 permet de faire varier la fréquence d'accord du filtre en cloche 10 en conservant le même coefficient de qualité.

Les circuits illustrés en figures 3 et 5, ne constituent que certains modes de réalisation de la présente invention et, au lieu d'utiliser un compteur simple muni d'une entrée de remise à zéro, incrémenté toujours dans le même sens, on pourrait prévoir un compteur-décompteur associé à un comparateur 25 particulier fournissant des signaux distincts selon que la fréquence centrale du filtre corrigé est supérieure, inférieure ou voisine de la valeur de référence fixée par le discriminateur.

On peut objecter à la présente invention que le problème du réglage du filtre en cloche est en fait transféré au réglage convenable de la fréquence de référence du discriminateur 24. Ceci est exact, mais le réglage du discriminateur 24 peut être supprimé. On peut combiner le réglage du discriminateur 24 avec celui des deux discriminateurs existant nécessairement dans un circuit de décodage de chrominance de type SECAM, ces discriminateurs étant désignés en figure 1 sous les références 14 et 15. En effet, il est connu, comme l'enseigne par exemple la demande de brevet français de la demanderesse déposée le 21 décembre 1979 et plubliée sous le numéro 2.472.302, d'ajuster le zéro d'un ou plusieurs discriminateurs de fréquence à l'aide d'une fréquence de référence, cette fréquence étant par exemple la fréquence de 4,43 MHz utilisée classiquement dans le système PAL. Cette fréquence peut être obtenue par un oscillateur à quartz qui existe classiquement dans le téléviseur s'il s'agit d'un appareil multistandard PAL/SECAM.

Dans le mode de réalisation de la figure 3, on a décrit un compteur à six bits permettant de commuter six condensateurs. Bien entendu, le nombre de bits du compteur pourrait être différent de six et ce compteur pourrait commuter des composants autres que des condensateurs, par exemple des résistances ou des inductances ou des combinaisons de composants élémentaires. De même, pour le mode de réalisation de la figure 5, le compteur peut avoir un nombre de bits différents et l'élément ramené en parallèle sur le filtre en cloche peut être différent d'une capacité.

## Revendications

1. Procédé de réglage automatique de la fréquence centrale du filtre en cloche d'un téléviseur couleur de type SECAM, caractérisé en ce qu'il consiste à:

a) connecter à ce filtre un amplificateur (20) pouvant être bouclé et fonctionnant alors en oscillateur oscillant à la fréquence centrale du filtre en cloche (10),

b) boucler l'amplificateur pendant un intervalle de temps correspondant à une partie au moins de la durée des signaux de retour de trame,

c) pendant cet intervalle de temps, transmettre les signaux de sortie de l'oscillateur à un discriminateur de fréquence (24),

d) comparer la sortie du discriminateur à une valeur de référence (Ref),

e) à des instants successifs au cours de cet intervalle de temps, connecter en parallèle avec le filtre un circuit (C1 à C6 ou C') de capacité variable de sorte que la valeur résultante de la capacité totale soit croissante, jusqu'à ce que la sortie du discriminateur soit voisine de la valeur de référence,

f) maintenir la connexion du circuit de capacité variable au moins jusqu'aux signaux de retour de trame suivants.

2. Procédé selon la revendication 1, caractérisé en ce que les étapes e) et f) consistent à adresser le résultat de la comparaison de l'étape d) à l'entrée d'un compteur incrémenté lors de chacun des instants successifs en fonction de ce résultat, les sorties du compteur étant connectées respectivement à des condensateurs (C1 à C6) montés pour être disposés en parallèle avec le filtre ou être déconnectés selon l'état de chacune des sorties.

3. Procédé selon la revendication 1, caractérisé en ce que les étapes e) et f) consistent à adresser le résultat de la comparaison de l'étage d) à l'entrée d'un compteur incrémenté lors de chacun des instants successifs en fonction du résultat, à envoyer les sorties du compteur sur un convertisseur numérique analogique, à commander par le signal de sortie du convertisseur numérique analogique le gain d'un potentiomètre électronique monté en parallèle avec le filtre et comportant respectivement entre sa borne de sortie positive ou sa borne de sortie négative et sa borne d'entrée un condensateur (C') et un résistance (R') de manière à ramener sur le filtre une capacité variable.

4. Circuit de réglage automatique de la fréquence centrale du filtre en cloche d'un téléviseur couleur de type SECAM caractérisé en ce qu'il comprend:

— un amplificateur (20) connecté au filtre en cloche (10),

— une boucle de réaction (23) permettant de faire fonctionner l'amplificateur en oscillateur à la fréquence centrale du filtre,

— un commutateur (22) pour fermer cette boucle pendant l'intervalle de temps correspondant à une partie au moins de la durée des signaux de retour de trame,

— un discriminateur de fréquence (24) recevant la sortie de l'amplificateur quand il fonctionne en oscillateur,

— un comparateur (25) comparant la sortie du discriminateur à un signal de référence (Ref),

— un compteur (27) incrémenté par la sortie du comparateur à des instants successifs compris dans ledit intervalle de temps,

— un circuit de capacité variable (C1 à C6 ou 28, 29, C'R') monté entre les sorties du compteur et le filtre pour ramener en parallèle sur le filtre une capacité variable dont la valeur est fonction de l'écart entre la sortie du discriminateur et la valeur de référence.

5. Circuit selon la revendication 4, caractérisé en ce que le circuit de capacité variable est constitué par des condensateurs (C1 à C6) de capacités choisies connectés au filtre et aux sorties respectives du compteur pour être disposés en parallèle avec le filtre ou être déconnectés selon l'état de chacune des sorties du compteur.

6. Circuit selon la revendication 4, caractérisé en ce que le circuit de capacité variable est constitué par un potentiomètre électronique (29) disposé en parallèle avec le filtre dont le gain est commandé par un signal analogique provenant d'un convertisseur numérique analogique (28) connectée aux sorties respectives du compteur, une capacitè (C') et une résistant (R') étant montées respectivement entre la borne d'entrée du potentiomètre électronique et sa borne de sortie positive ou négative pour ramener en parallèle sur la filtre une capacité variable.

## Patentansprüche

1. Verfahren zur automatischen Einstellung der Mittenfrequenz des Glockenfilters eines Farbfernsehgeräts von SECAM-Typ, dadurch gekennzeichnet, daß es darin besteht,

a) an dieses Filter einen Verstarker (20) anzuschließen, der rückgekoppelt werden kann und dann als mit der Mittenfrequenz des Glockenfilters (10) schwingender Oszillator betrieben wird,

b) den Verstärker während eines Zeitintervalls entsprechend mindestens einem Teil der Dauer der Rasterrücklaufsignale rückzukoppeln,

c) während dieses Zeitintervalls die Ausgangssignale des Oszillators an einen Frequenzdiskriminator (24) zu übertragen,

d) den Ausgang des Diskriminators mit einem Bezugswert (Ref) zu vergleichen,

e) zu aufeinanderfolgenden Zeitpunkten während dieses Zeitintervalls einen Schaltkreis variabler Kapazität (C1 bis C6 oder C') zum Filter parallel zu schalten, sodaß der sich ergebende Wert der Gesamtkapazität ansteigt, bis der Ausgang des Diskriminators nahe bei dem Bezugswert liegt,

f) den Anschluß der Schaltkreis mit variabler Kapazität mindestens bis zu den nächstfolgenden Rasterrücklaufsignalen aufrecht zu erhalten.

2. Verfahren nach Anspruch 1, dadurch gekennzeichnet, daß die Verfahrensschritte e) und f) darin bestehen, das Vergleichsergebnis der Verfahrensschritts d) an den Eingang eines Zählers zu geben, der zu jedem der aufeinanderfolgenden Zeitpunkte abhängig von diesem Ergebnis weitergeschaltet wird, wobei die Ausgänge des Zählers je an Kondensatoren (C1 bis C6) angeschlossen sind, derart, daß die Kondensatoren je nach dem Zustand jedes der Ausgänge parallel an das Filter angeschlossen sind oder nicht.

3. Verfahren nach Anspruch 1, dadurch gekennzeichnet, daß die Verfahrensschritte e) und f) darin bestehen, das Vergleichsergebnis des Verfahrensschritts d) an den Eingang eines Zählers zu geben, der zu jedem der aufeinanderfolgenden Zeitpunkte abhängig vom Ergebnis weitergeschaltet wird, die Ausgänge des Zählers an einen Digital-Analogwandler anzulegen, die Stellung eines Elektronischen Potentiometers durch das Ausgangssignal des Digital-Analogwandlers zu steuern, wobei das Potentiometer parallel zum Filter liegt und zwischen seinem positiven Ausgangsanschluß bzw seinem negativen Ausgangsanschluß und seinem Eingangsanschluß einen Kondensator (C') und einen Widerstand (R') aufweist, sodaß dem Filter eine variable Kapazität verliehen wird.

4. Schaltkreis zur automatischen Einstellung der Mittenfrequenz des Glockenfilters eines Farbfernsehgeräts vom SECAM-Typ, dadurch gekennzeichnet, daß er aufweist:

— einen an das Glockenfilter (10) angeschlossenen Verstärker (20),

— eine Rückkopplungsschleife (23), die es ermöglicht, den Verstärker bei der Mittenfrequenz des Filters schwingen zu lassen,

— einen Schalter (22) zum Schließen der Schleife während des mindestens einem Teil der Dauer der Rasterrucklaufsignale entsprechenden Zeitintervalls,

— einen Frequenzdiskriminator (24), der das Ausgangssignal des Verstärkers empfängt, wenn dieser als Oszillator arbeitet,

— einen Komparator (25), der den Ausgang des Diskriminators mit einem Bezugssignal (Ref) vergleicht,

— eine Zähler (27), der vom Ausgang des Komparators zu aufeinanderfolgenden Zeitpunkten innerhalb des Zeitintervalls weitergeschaltet wird,

— einen Schaltkreis mit variabler Kapazität (C1 bis C6 oder 28, 28, C'R'), der zwischen die Ausgänge des Zählers und das filter eingefügt ist, um parallel an das Filter eine variable Kapazität anzuschalten, deren Wert vom Unterschied zwischen dem Ausgang des Disktiminators und dem Bezugswert abhängt.

5. Schaltkreis nach Anspruch 4, dadurch gekennzeichnet, daß der Schaltkreis mit variabler Kapazität aus Kondensatoren (C1 bis C6) ausgewählter Kapazitäten besteht, die an das Filter und an die entsprechenden Ausgänge des Zählers angeschlossen sind, derart, daß die Kondensatoren je nach dem Zustand jedes der Ausgänge des Zählers parallel an das Filter angeschlossen sind oder nicht.

6. Schaltkreis nach Anspruch 4, dadurch gekennzeichnet, daß der Schaltkreis mit variabler Kapazität aus einem elektronischen Potentiometer (29) besteht, das zum Filter parallel liegt und dessen Stellung von einem vom Digital-Analogwandler (28) kommenden Signal gesteuert wird, wobei dieser Wandler an die entsprechenden Ausgänge des Zählers angeschlossen ist und ein Kondensator (C') und ein Widerstand (R') zwischen die Eingangsklemme des elektronischen Potentiometers und dessen positive bzw negative Ausgangsklemme eingefügt ist, um dem Filter eine variable Kapazität zu verleihen.

**Claims**

1. A method for automatically adjusting the central frequency of a filter having a bell-shaped characteristic for a color TV set of the SECAM type, characterized in that it consists in the following steps:

a) connecting an amplifier (20) to the filter the amplifier being susceptible to be looped such that it operates as an oscillator oscillating at the central frequency of the filter (10) with a bell-shaped characteristic,

b) looping the amplifier during a laps of time corresponding to at least part of the duration of the frame return signals,

c) transmitting during this laps of time the oscillator output signals to a frequency discriminator (24),

d) comparing the discriminator output to a reference value (Ref),

e) connecting, at successive instants during said laps of time, a circuit of variable capacitance (C1 to C6 or C') parallelly to the filter in such a manner that the resulting value of the total capacitance increases until the discriminator output becomes close to the reference value,

f) conserving the connection of the circuit with variable capacitance at least up to the appearance of the next-following frame return signals.

2. A method according to claim 1, characterized in that the steps e) and f) consist in transmitting the comparison result according to step d) to a counter which is incremented at each one of the successive instants in accordance with this result, the counter outputs being connected respectively to capacitors (C1 to C6) such that they are parallelly disposed to the filter, or being disconnected therefrom, according to the state of each one of the outputs.

3. A method according to claim 1, characterized in that the steps e) and f) consist in transmitting the comparison result of step d) to the input of a counter which is incremented at each one of the successive instants in accordance with the result, in transmitting the counter output signals to a digital to analog converter, in adjusting by the digital to analog converter output signal the gain of an electronic potentiometer which is arranged parallelly to the filter and comprises respectively between its positive output terminal or its negative output terminal and its input terminal, a capacitor (C') and a resistor (R') in order to associate a variable capacitance to the filter.

4. A circuit for automatically adjusting the central frequency of a filter with bell-shaped characteristics for a color TV set of the SECAM type, characterized in that it includes:
— an amplifier (20) connected to the filter (10),
— a feedback loop (23) allowing the amplifier to oscillate at the central frequency of the filter,
— an interruptor (22) for closing said loop during the laps of time corresponding to at least part of the duration of the frame return signals,
— a frequency discriminator (24) receiving the output of the amplifier whenever it oscillates,
— a comparator (25) comparing the discriminator output to a reference signal (Ref),
— a counter (27) which is incremented by the comparator output at successive instants included in said laps of time,
— a circuit having a variable capacitance (C1 to C6 or 28, 29, C'R') and being mounted between the counter output to the filter in order to associate, parallelly to the filter, a variable capacitance, the value of which depends on the difference between the discriminator output level and the reference value.

5. A circuit according to claim 4, characterized in that the circuit with variable capacitance is constituted by capacitors of selected capacitances (C1 to C6) connected to the filter and to the respective outputs of the counter for being arranged in parallel to the filter or for being disconnected therefrom, according to the state of each of the counter outputs.

6. A circuit according to claim 4, characterized in that the circuit with variable capacitance is constituted by an electronic potentiometer (29) which is arranged in parallel to the filter and the gain of which is adjusted by an analog signal coming from a digital to analog converter (28) connected to the repective counter outputs, a capacitor (C') and a resistor (R') being branched respectively between the input terminal of the electronic potentiometer and its positive or negative output terminal such that a variable capacitance is parallelly associated to the filter.

Fig.1

Fig.2

Fig.3

Fig.4 A

Fig.4 B

Fig.4 C

Fig.4 D

Fig.5